Europäisches Patentamt

European Patent Office

Office européen des brevets

(11) Veröffentlichungsnummer : **0 325 599 B1**

## (12) EUROPÄISCHE PATENTSCHRIFT

(45) Veröffentlichungstag der Patentschrift :
23.10.91 Patentblatt 91/43

(51) Int. Cl.$^5$ : **G03G 15/08, B65G 53/42**

(21) Anmeldenummer : 87906158.8

(22) Anmeldetag : 25.09.87

(86) Internationale Anmeldenummer :
PCT/DE87/00438

(87) Internationale Veröffentlichungsnummer :
WO 88/02503 07.04.88 Gazette 88/08

(54) VORRICHTUNG ZUM EINFÜLLEN VON TONER AUS EINEM TRANSPORTBEHÄLTER IN EINEN TONERVORRATSBEHÄLTER.

(30) Priorität : 02.10.86 DE 3633599

(43) Veröffentlichungstag der Anmeldung :
02.08.89 Patentblatt 89/31

(45) Bekanntmachung des Hinweises auf die
Patenterteilung :
23.10.91 Patentblatt 91/43

(84) Benannte Vertragsstaaten :
DE FR GB IT NL SE

(56) Entgegenhaltungen :
EP-A- 0 008 270
DE-C- 3 224 296
US-A- 2 419 386
Patent Abstracts of Japan, volume 10. No. 223
(P-483)(2279), 5 August 1986, & JP, A, 6159464

(56) Entgegenhaltungen :
Research Disclosure, No. 213, January 1982,
(Havant, Hampshire, GB), "Pneumatic toner
transport", page 485, No.21333 see the whole
document
Xerox Disclosure Journal, volume 1, No. 8,
August 1976, (Stamford, Connecticut, US), D.J.
Harmon: "Pneumatic toner conveying system", page 47 see the whole document

(73) Patentinhaber : Siemens Nixdorf
Informationssysteme AG
Otto-Hahn-Ring 6
W-8000 München 83 (DE)

(72) Erfinder : BUEYUEKGUECLUE, Mehmet, Ali
Gustav-Heinemann-Ring 67
W-8000 München 83 (DE)
Erfinder : MAIER, Manfred
Dohlenweg 16
W-8000 München 45 (DE)

(74) Vertreter : Fuchs, Franz-Josef, Dr.-Ing. et al
Postfach 22 13 17
W-8000 München 22 (DE)

**Beschreibung**

Die Erfindung betrifft eine Vorrichtung gemäß dem Oberbegriff des Patentanspruchs 1.

In der Kopiertechnik und bei modernen Datenschnelldruckern die nach dem Prinzip der Elektrofotographie arbeiten, werden Ladungsbilder auf einem Aufzeichnungsträger z.B. direkt auf einen Zwischenträger (Fotoleitertrommel) oder direkt auf Spezialpapier erzeugt und anschließend mit einem schwarzen Pulver (Toner) in eine Entwicklerstation eingefärbt. Dieses Tonerbild wird bei Verwendung eines Zwischenträgers anschließend auf Normalpapier übertragen und auf diesem fixiert. In der Regel wird zum Entwickeln ein Zweikomponenten-Entwickler verwendet, der aus ferromagnetischen Trägerteilchen und Tonerteilchen besteht. Der Entwickler wird mittels einer Magnetbürstenanordnung am Ladungsbild auf dem Zwischenträger vorbeigeführt, an dem der Toner verursacht durch elektrostatische Kräfte haften bleibt.

Ein elektrofotographisches Kopiergerät, das nach dem angegebenen Prinzip Ladungsbilder entwickelt, ist z.B. aus der DE-AS 21 66 667 bekannt.

Durch das Einfärben der Ladungsbilder auf dem Zwischenträger nimmt die Tonerkonzentration im Entwicklergemisch der Entwicklerstation ständig ab. Es ist darum erforderlich, dem Entwicklergemisch ständig neuen Toner dosiert zuzuführen. Da bei schnellen Kopiergeräten und Hochleistungsdatendruckern der Tonerverbrauch pro Zeiteinheit sehr hoch ist, wird bei solchen Geräten ein geräumiger Tonervorratsbehälter verwendet um Stillstandszeiten durch Nachfüllen von Toner zu vermeiden. Wenn dieser Tonervorratsbehälter leer ist, wird der Toner, der üblicherweise in handlichen Behältern geliefert wird, in den Vorratsbehälter gefüllt. Dabei ist es wichtig, den Toner aus dem Behälter so in den Vorratsbehälter zu füllen, daß kein Toner verschüttet und dadurch die Umgebung verschmutzt wird.

Aus der DE-PS 32 24 296 ist eine Vorrichtung zum Einfüllen und Sieben von Toner aus einem Behälter in einen Tonervorratsbehälter bekannt. Dabei wird der in einem Transportbehälter, nämlich einer Tonerflasche, befindliche Toner einem Vorratsbehälter dadurch zugeführt, daß die Tonerflasche in eine Einfüllöffnung des Vorratsbehälters gestülpt wird. Im Bereich der Einfüllöffnung ist ein gegenüber dem Vorratsbehälter mit einem Sieb abgeschlossener Siebkorb angeordnet, der mit einer bedarfsweise auslösbaren elektrischen Rütteleinrichtung in Verbindung steht. Die Rütteleinrichtung wird dabei durch Öffnen des die Einfüllöffnung abschließenden Deckels ausgelöst.

Bei derartigen Einfüllvorrichtungen besteht nun die Gefahr, daß beim manuellen Umfüllen aus der Tonerflasche der Toner verschüttet wird. Da außerdem der Toner nur an einer bestimmten Stelle dem Tonervorratsbehälter zugeführt wird, sind besondere Verteilereinrichtungen im Tonervorratsbehälter notwendig, um eine gleichmäßige Zuführung des Toners zur Entwicklerstation zu gewährleisten.

Es ist weiterhin aus Patent Abstracts of Japan, volume 10. No. 223 (P-483)(2279), 5 August 1986 und JP-A-6159464 bekannt, aus einem Tonervorratsbehälter mit Hilfe von Unterdruck Toner abzusaugen und der Entwicklerstation eines elektrophotografischen Druck- oder Kopiergerätes zuzuführen.

Aufgabe der Erfindung ist es, eine Vorrichtung der eingangs genannten Art so auszugestalten, daß der Toner aus einem einfachen kostengünstigen Transportbehälter in einen geräteseitigen Vorratsbehälter mit großem Fassungsvermögen umgefüllt werden kann, ohne daß dabei Tonerverfestigungen auftreten oder daß Toner verschüttet wird.

Diese Aufgabe wird bei einer Vorrichtung der eingangs genannten Art gemäß dem kennzeichnenden Teil des ersten Patentanspruches gelöst.

Vorteilhafte Ausführungsformen der Erfindung sind in den Unteransprüchen gekennzeichnet.

In vorteilhafter Weise wird bei der Erfindung der Toner aus einem Transportbehälter, nämlich der Tonerflasche über eine flexible Leitung mittels Unterdruck durch Saugen entfernt. Dazu wird ein Saugrüssel vorgesehen, der ein im Ansaugbereich offenes Innenrohr und ein das Innenrohr im Abstand umhüllendes Außenrohr enthält. Das Außenrohr ist nach oben hin offen und bildet dadurch eine Luftansaugöffnung. Im Ansaugbereich sind am Außenrohr Tonereintrittsöffnungen angeordnet. Der über ein Sauggebläse erzeugte Unterdruck bewirkt einen Luftstrom durch das Außenrohr und das Innenrohr. Durch die Tonereintrittsöffnungen hindurch wird der Toner in das Innenrohr mitgerissen.

Über eine flexible Leitung gelangt der Toner in einen Vorratsbehälter, der über ein Filter in einen Absetzraum und in einen vom Absetzraum getrennten Saugram aufgeteilt ist. Der Saugraum steht mit einer Unterdruckpumpe in Verbindung, die einen Unterdruck erzeugt, wodurch sich der Toner am Filter des Absetzraumes absetzt.

Bei einer weiteren vorteilhaften Ausführungsform der Erfindung ist das Filter derart ausgestaltet, daß es sich einerseits unter der Wirkung des durchströmenden Luftstromes auswölbt, andererseits bei Unterbrechung des Luftstromes wieder zurückwölbt. Durch die damit hervorgerufene Formänderung der Filteroberfläche platzt der daran haftende Toner ab und fällt in den darunterliegenden Absetzraum. Am Boden des Absetzraumes ist eine Transportschnecke angeordnet, die den Toner dosiert der Entwicklerstation des Druckers zuführt. Um dieses Vor- und Zurückwölben zu bewirken, können bei einer Ausführungsform der Erfindung auf dem Filter ein oder mehrere Gewichte angeordnet sein.

Zur Begrenzung der Auslenkung infolge des Saugstromes ist gegenüber dem Saugraum ein Gitter vorgesehen.

Bei einer weiteren vorteilhaften Ausführungsform der Erfindung ist anstelle des Gitters ein flexibles Netz angeordnet. In diesem Falle ist das Gewicht nicht dem Filter sondern diesem Netz zugeordnet, womit das Filter nicht durch die Gewichte mechanisch belastet wird.

Ausführungsformen der Erfindung sind in den Zeichnungen dargestellt und werden im folgenden beispielsweise näher beschrieben. Es zeigen

Fig. 1 eine schematische Darstellung einer Vorrichtung zum Einfüllen von Toner aus einem Transportbehälter in einem Tonervorratsbehälter - teilweise in Schnittdarstellung - mit einem flexiblen Filter

Fig. 2 eine schematische Darstellung derselben Vorrichtung mit einem Netz zur Aufnahme von Gewichten und

Fig. 3 eine schematische Schnittdarstellung eines Tonertransportbehälters in Form einer Flasche mit einem darin angeordneten Saugrüssel.

In einer hier nicht einzelnen dargestellten nichtmechanischen Schnelldruckeinrichtung befindet sich ein Tonervorratsbehälter 10 aus dem der Toner einer Entwicklerstation 11 zur Entwicklung von Ladungsbildern zugeführt wird. Der Tonervorratsbehälter 10 hat etwa die Breite der Entwicklerstation 11, was in etwa der Druckbreite entspricht und gliedert sich in einen Absetzraum 12 und einen Saugraum 13. Die Räume sind durch ein Filter 14 das aus flexiblen Material besteht, voneinander getrennt. Das Filter 14 ist hinsichtlich des Saugraumes 13 durch ein Gitter 15 abgeschlossen. Die Öffnungen des Gitters können dabei entsprechend der gewünschten Druckverteilerverteilung angeordnet und dimensioniert sein.

Der Saugraum 13 steht mit einer elektromotorisch betriebenen Unterdruckpumpe in Form eines Sauggebläses 16 in Verbindung.

Der Absetzraum 12 weist einen Anschlußstutzen 17 auf, an den eine flexible Rohrleitung 18 angeschlossen ist, die wiederum in Verbindung mit einem Saugrüssel 19 steht. Dieser dient zum Umfüllen des Toners aus einem Tonertransportbehälter 20 (Tonerflasche) in den Tonervorratsbehälter 10.

Zum Umfüllen des in Tonerflaschen 20 angelieferten Toners 21 in den Tonervorratsbehälter 10 bzw. in die Entwicklerstation 11 wird die flexible Saugleitung 18 mit dem Saugrüssel 19 in die Tonerflasche eingeführt und dann das Sauggebläse 16 betätigt. Der im Saugraum 13 erzeugte Unterdruck erzeugt einen entsprechenden Unterdruck im Absetzraum 12, wodurch der Toner 21 nach dem Staubsaugerprinzip in den Absetzraum 12 eingesaugt wird. Der Toner setzt sich am Filter 14 ab und fällt in den Absetzraum 12. Dort wird er über eine Mischeinrichtung 22, die von einem Motor 23 angetrieben wird, durchmischt. Im unteren Bereich des konisch ausgestalteten Absetzraumes 12 ist eine ebenfalls über den Motor 23 angetriebene Dosiereinrichtung in Form von zwei gegenläufig angetriebenen Schaumstoffwalzen 24 angeordnet. Diese Schaumstoffwalzen 24 transportieren bedarfsweise in Abhängigkeit von dem über einen Füllstandsensor 25 erfaßten Füllstand den Toner zur Entwicklerstation 11.

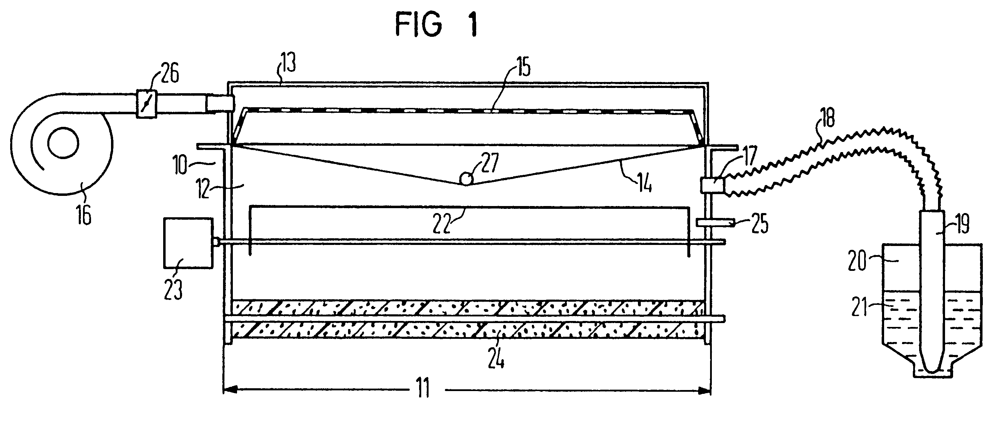

Das zur Tonerrückhaltung dienende Filter 14 ist elastisch und wölbt sich bei eingeschaltetem Sauggebläse 16 nach oben aus und legt sich an das halbrundförmig ausgestaltete Gitter 15 an. Wird das Sauggebläse 16 abgeschaltet oder über ein Unterdruckventil 26 der Luftstrom unterbrochen, so schwingt unter der Wirkung der an der Oberfläche des Filters 14 angeordneten Gewichte 27 - von denen hier nur eines dargestellt ist - das Filter in die in der Fig. 1 dargestellte Ausgangslage zurück. Durch die damit hervorgerufene Formänderung der Filteroberfläche platzt der daran haftende Toner ab und fällt in darunterliegenden Absetzraum 12.

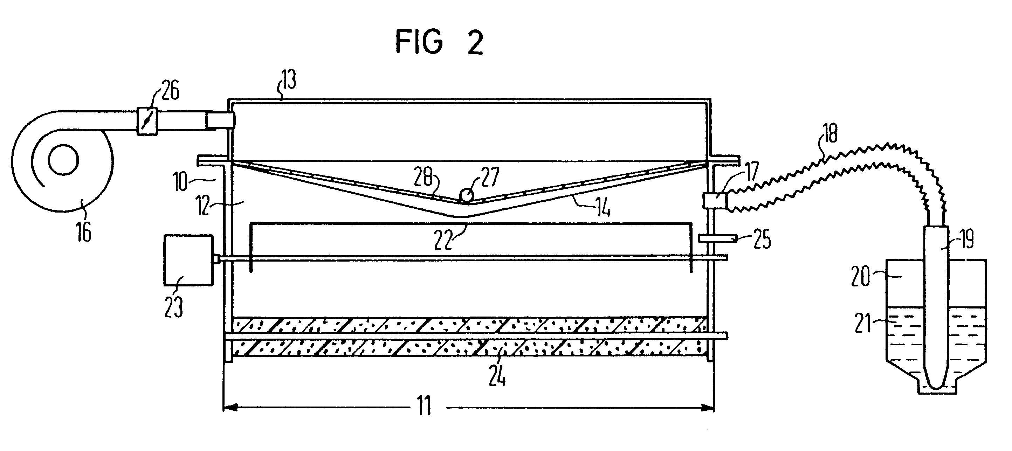

Bei der in der Fig. 2 dargestellten Ausführungsform ist oberhalb des flexiblen Filters 14 ein ebenfalls elastisches Netz 28 zur Aufnahme der Gewichte 27 angeordnet. Das Netz 28 kann dabei anstelle des Gitters 15 der Ausführungsform gemäß Fig. 1 angeordnet sein. Da das Netz 28 die Gewichte 27 aufnimmt, wird das empfindliche Filter 14 durch die Gewichte 27 nicht zusätzlich belastet.

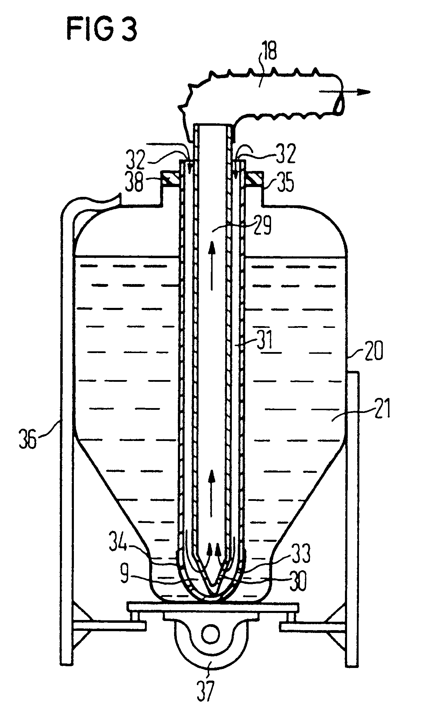

Zum Absaugen des Toners 21 aus der Tonerflasche 20 dient der in der Fig. 3 im Schnitt dargestellte Saugrüssel 19. Dieser enthält ein an seinem unteren Ende keilförmig geschnittenes Innenrohr 29, das mit dem flexiblen Saugrohr 18 in Verbindung steht und Ansaugöffnungen 30 für den Toner aufweist. Vollständig umgeben ist das Innenrohr 29 von einem im Abstand angeordneten Außenrohr 31, das einerseits an seinem oberen Teil eine sich zur Umgebung öffnende Luftansaugöffnung 32 aufweist, andererseits an seiner Spitze im Ansaugbereich Tonereintrittsöffnungen 33. Der Abstand und die Führung des Innenrohrs 29 zum Außenrohr 31 wird mittels hier nicht dargestellter Distanzelemente bewirkt, die z.B. aus drei am Umfang gleichmäßig verteilten Schaumstoffstreifen bestehen können.

Um verklumpte Tonerrückstände von der Zuführung zur Druckerstation fernzuhalten, können die Tonereintrittsöffnungen 33 von einem den Ansaugbereich des Saugrüssels überdeckenden Tonersieb 34 abgedeckt sein.

Die in der Fig. 3 dargestellte Vorrichtung arbeitet wie folgt: Die an ihrem Bodenbereich konisch ausgestaltete Tonerflasche 20, deren Eingangsöffnung 35 von einem Deckel abgeschlossen ist, wird zunächst in einer die Tonerflasche aufnehmenden Haltevorrichtung 36 verrastet an deren Boden sich eine Rütteleinrichtung 37 in Form z.B. eines Umwuchtmotores befindet. Die Tonerflasche 20 ist dabei so ausgestaltet oder wird derart in der Haltevorrichtung 36 verrastet, daß der zum Absaugen eingesteckte Saugrüssel 19 mit seinem Absaugbereich an der tiefsten Stelle der Toner-Flasche 20 - nämlich dem konisch ausgeformten, vertieften Teil - zu liegen kommt. Eine z.B. dem Saugrüssel 19 zugeordnete Dichtung 38 sorgt im Bereich des Einfüllstutzens 35 für eine entsprechende Abdichtung.

Diese Abdichtung kann folienartig ausgebildet sein und die Behälter abschließen. Zur Inbetriebnahme wird die Abdichtung mit Hilfe des Saugrüssels perforiert.

Nach Einschalten der Rütteleinrichtung 37 durch Betätigung eines Umwuchtmotores wandert der Toner 21 zunächst in den Bereich der Tonereintrittsöffnungen 33 mit dem Tonersieb 34. Dann gelangt er durch das Sieb in den Zwischenraum zwischen dem Innenrohr 39 und dem Außenrohr 31 und zwar im Bereich der Öffnungen 10 des Innenrohres. Nach Einschalten des Sauggebläses 16 wird der Toner von der Luftströmung (Pfeile) die von oben her eingesaugt wird erfaßt und wandert über die flexible Leitung 18 in den Absetzraum 12.

Dadurch, daß die Luft von außen her eingesaugt wird und als Transportmittel für den Toner dient, dringt keinerlei Toner aus der Tonerflasche in die Umgebung aus und verschmutzt sie.

## Patentansprüche

1. Vorrichtung zum Einfüllen von Toner (21) aus einem Transportbehälter (20) in einen Tonervorratsbehälter (10) und von dort in eine Entwicklerstation (11) eines elektrofotografischen Druck- oder Kopiergerätes, wobei zum Umfüllen des Toners (21) aus dem Transportbehälter (20) in den Tonervorratsbehälter (10) durch Unterdruckerzeugung im Tonervorratsbehälter (10) ein in den Transportbehälter (20) einbringbarer, einen Ansaugbereich aufweisenden Saugrüssel (19) vorgesehen ist, **dadurch gekennzeichnet**, daß der Tonervorratsbehälter (10) einen Absetzraum (12), der mit der Entwicklerstation in Verbindung steht, und einen von dem Absetzraum über ein Filter (14) getrennten Ansaugraum (13) mit zugeordneter, Unterdruck erzeugender Einrichtung (16) aufweist, wobei das Filter (14) derart ausgestaltet ist, daß es sich einerseits unter der Wirkung des durchströmenden Luftstromes auswölbt, andererseits bei Unterbrechung des Luftstromes wieder zurückwölbt.

2. Vorrichtung nach Anspruch 1, **dadurch gekennzeichnet**, daß gegenüber dem Ansaugraum (13) ein die Auswölbung des Filters (14) begrenzendes Gitter (15) vorgesehen ist.

3. Vorrichtung nach Anspruch 1, **dadurch gekennzeichnet**, daß das Filter (14) ein oder mehrere Gewichte (27) aufweist, die das Filter (14) durch Schwerkraft zurückwölben.

4. Vorrichtung nach Anspruch 3, **dadurch gekennzeichnet**, daß zwischen dem Filter (14) und dem Saugraum (13) ein elastisches Netz (28) angeordnet ist.

5. Vorrichtung nach einem der Ansprüche 1 bis 4, **dadurch gekennzeichnet**, daß der Tonertransportbehälter (20) in seinem Bodenbereich zur Aufnahme des Saugrüssels (19) vertieft derart ausgeformt ist, daß sich der Toner in diesem Bereich sammelt.

6. Vorrichtung nach einem der Ansprüche 1 bis 5, **dadurch gekennzeichnet**, daß der Saugrüssel ein im Ansaugbereich offenes, mit dem Tonervorratsbehälter verbundenes Innenrohr (29) und ein das Innenrohr (29) im Abstand umhüllendes Außenrohr (31) aufweist, wobei das Außenrohr (31) einerseits Luftansaugöffnungen (32) und andererseits im Ansaugbereich Tonereintrittsöffnungen (33) aufweist, so daß die das Außenrohr (31) durchströmende Ansaugluft den Toner durch die Tonereintrittsöffnungen (33) in das Innenrohr (29) mitreißt.

7. Vorrichtung nach Anspruch 6, **dadurch gekennzeichnet**, daß die Tonereintrittsöffnungen (33) durch ein Tonersieb (34) abgeschlossen sind.

8. Vorrichtung nach einem der Ansprüche 6 oder 7, **dadurch gekennzeichnet**, daß eine den Tonertransportbehälter (20) aufnehmende Halteeinrichtung (36) mit zugeordneter Rütteleinrichtung (37) vorgesehen ist.

## Claims

1. Device for transferring toner (21) from a transport container (20) into a toner reservoir (10) and from the latter into a developer station (11) of an electrophotographic printer or copier, a suction nozzle (19) which can be introduced into the transport container (20) and has an intake area is provided for transferring the toner (21) from the transport container (20) into the toner reservoir (10) by generating a low pressure in the toner reservoir (10), characterised in that the toner reservoir (10) has a settling space (12) which communicates with the developer station and an intake space (13), separated from the settling space by a filter (14), having an associated device (16) for generating a low pressure, the filter (14) being designed in such a way that firstly it arcs outwards under the effect of the through-flowing air stream, and secondly arcs back again when the air stream is interrupted.

2. Device according to Claim 1, characterised in that a grating (15) that limits the outward arcing of the filter (14) is provided opposite the intake space (13).

3. Device according to Claim 1, characterised in that the filter (14) has one or more weights (27) which cause the filter to arc back under the force of gravity.

4. Device according to Claim 3, characterised in that an elastic net (28) is arranged between the filter (14) and the suction space (13).

5. Device according to one of Claims 1 to 4, characterised in that the toner transport container (20) is formed with a depression in its floor region for receiving the suction nozzle (19) such that the toner collects in this region.

6. Device according to one of Claims 1 to 5, characterised in that the suction nozzle has an inner tube (29) which is open in the intake area and connected to the toner reservoir and an outer tube (31) that envelopes the inner tube (29) at a distance therefrom, the outer tube (31) having firstly air intake openings (32) and secondly toner inlet openings (36) in the intake area so that the intake air flowing through the outer tube (31) draws in the toner through the toner inlet openings (33) into the inner tube (29).

7. Device according to Claim 6, characterised in that the toner inlet openings (33) are closed by a toner sieve (34).

8. Device according to one of Claims 6 or 7, characterised in that a holding device (36) with assigned shaker device (37) is provided, said holding device (36) receiving the toner transport container (20).

## Revendications

1. Dispositif pour introduire du toner (21) depuis un récipient de transport (20) dans un réservoir à toner (10) et, de là, dans un poste de développement (11) d'un dispositif d'impression ou de copiage électrophotographique, et dans lequel, pour transférer le toner (21) du récipient de transport (20) dans le réservoir à toner (10), au moyen de la production d'une dépression dans ce réservoir (10), il est prévu un embout d'aspiration (19) possédant une zone d'aspiration, caractérisé par le fait que le réservoir à toner (10) possède un espace de dépôt (12), qui est raccordé au poste de développement, et un espace d'aspiration (13), qui est séparé de l'espace de dépôt par un filtre (14) et auquel est associé un dispositif (16) produisant une dépression, le filtre (14) étant agencé de manière, d'une part, à être cintré sous l'effet du courant d'air circulant, et, d'autre part, à se cintrer dans le sens inverse lors de l'interruption du courant d'air.

2. Dispositif suivant la revendication 1, caractérisé par le fait qu'une grille (15) limitant le cintrage du filtre (14) est prévue en vis-à-vis de l'espace d'aspiration (13).

3. Dispositif suivant la revendication 1, caractérisé par le fait que le filtre (14) possède un ou plusieurs poids (27) qui appliquent un cintrage inverse au filtre (14) sous l'effet de la force de pesanteur.

4. Dispositif suivant la revendication 3, caractérisé par le fait qu'un filet élastique (28) est disposé entre le filtre (14) et l'espace d'aspiration (13).

5. Dispositif suivant l'une des revendications 1 à 4, caractérisé par le fait que le réservoir à toner (20) peut être conformé en renfoncement au niveau de la zone de son fond pour la réception de la buse d'aspiration (19) de manière que le toner se rassemble dans cette zone.

6. Dispositif suivant l'une des revendications 1 à 5, caractérisé par le fait que la buse d'aspiration possède un tube intérieur (29) ouvert dans la zone d'aspiration et raccordé au réservoir à toner, et un tube extérieur (31) entourant à distance le tube intérieur (29), le tube extérieur (31) possédant, d'une part, des ouvertures d'aspiration d'air (32), et, d'autre part, dans la zone d'aspiration, des ouvertures (33) d'entrée du toner de sorte que l'air d'aspiration traversant le tube extérieur (31) entraîne le toner, par les ouvertures (33) d'entrée de ce dernier, dans le tube intérieur (29).

7. Dispositif suivant la revendication 6, caractérisé par le fait que les ouvertures (33) d'introduction du toner sont fermées par un tamis à toner (34).

8. Dispositif suivant l'une des revendications 6 ou 7, caractérisé par le fait qu'il est prévu un dispositif de retenue (36) qui loge le réservoir à toner (20) et auquel est associé un dispositif de secouage (37).

# FIG 1

EP 0 325 599 B1

FIG 2

# FIG 3